# EUROPEAN PATENT APPLICATION

(11) **EP 4 635 713 A1**
(43) Date of publication of application: **22.10.2025**
(21) Application number: 25166287.0
(22) Date of filing: 26.03.2025
(51) Int. Cl.: B29C 48/71, B29C 48/00, B29C 48/10, B29C 48/21

(54) **LAYER MULTIPLICATION SYSTEM FOR MULTILAYER TUBULAR FILM EXTRUSION SYSTEM**

(30) Priority: 11.04.2024 IT 202400008113
(71) Applicant: Lepori, Pietro Mario, 21040 Venegono Inferiore (VA) (IT)
(72) Inventor: Lepori, Pietro Mario, 21040 Venegono Inferiore (VA) (IT)
(74) Representative: Faggioni, Carlo Maria

(57) **Abstract**

An extrusion system for a multilayer tubular film is disclosed, comprising
an extruder, and
a multi-layer extrusion head equipped with an end extrusion slit
in which downstream of said extrusion head there is provided at least a multiplier device (M, M', M") equipped with an inlet slit (I), arranged in register with said extrusion slit, and an outlet slit (U) and comprising in sequence
an initial dividing plate (D) with a plurality Z of groups of N dividing channels (1a-1n) at said inlet slit (I) connecting respective adjacent inlet ports
of radial width equal to that of said inlet slit (I) and circumferential extension equal to Z/N of that of said inlet slit (I) to corresponding outlet ports
of radial width equal to 1/N that of said inlet slit (I) and circumferential extension equal to Z/N that of said inlet slit (I)
staggered radially between them,
a divergent plate (V) equipped with a plurality Z of groups of N divergent channels (2a-2n) arranged in continuity with said dividing channels (1a-1n) and having an increasing circumferential extension thereby forming N continuous concentric radially staggered channels,
a convergent plate (C) equipped with N continuous circumferential channels (3a-3n) arranged in continuity with said divergent channels (2a-2n) and converging radially with each other toward a single outlet slit (U).

## Description

### FIELD OF THE INVENTION

The present invention relates to the field of plastic film extrusion systems, in particular tubular plastic film extruders.

### STATE OF PRIOR ART

As is well known, in the field of thin plastic film production, there are several extrusion techniques: all involve setting up an extrusion head or die downstream of an extrusion unit in which the plastic material in its molten state is pressurised and then pushed through the extrusion head.

Depending on the configuration of the extrusion head, a flat film or a tubular film is obtained.
With reference to this second type of extrusion head, the known technique already offers the possibility of producing
a monolayer film, which protrudes from a slit, also known in jargon as gap or die aperture, with a closed geometry (circular, rectangular, ...), of the extrusion head, or
a multilayer film, which protrudes from a slit to which a plurality of adjacent concentric channels are connected, through which plastic materials of even different natures (such as colour, density, chemical formulation, ...) are conveyed.

There are many different plastics that can be extruded using these techniques, and some can be further stretched and thinned downstream in the extrusion die using various techniques, e.g. bubble blowing. Examples include LDPE, HDPE, PLA, PHA, TPU, EVOH, MDPE, TIE PA and other biodegradable materials. Next to these, in multilayer films, one or more barrier layers made of e.g. PA6, PA66 and others are used.

Examples of multi-layer film extrusion heads are described in US 2010/215879, CN 201317092, CN 115401972, WO 2021/257759, CH-362221, EP0296370, FR2008934 and EP1074375. In the latter two, for example, there are provided three separate concentric ducts, which converge in an annular arrangement towards the longitudinal axis of the extrusion head until they enter the same end die, near the exit from the extrusion head.

In some specific areas - for example when plastic films with a substantial gas barrier effect need to be supplied, without having to increase the film thickness too much - there is a need to increase the number of layers that are simultaneously co-extruded into the same film.

At present, this can only be achieved in tubular films at the expense of significant complication (by providing several concentric channels in the same head) and bulk (by providing a longitudinal sequence of multilayer extrusion heads), which reasonably limits the number of layers obtainable to around eleven from a practical point of view, but at the expense of significant constructional complexity.

It should also be noted that, often, the normal production doesn't need to create multi-layer configurations with a high degree of variability in the position and nature of the layers, but rather the repetition of a certain sequence, for example of two or three different layers, several times combined in the same film thickness.

### SUMMARY

The problem behind the invention is therefore to offer an extrusion system that allows the number of co-extruded layers to be multiplied, at a reduced complexity and bulk.

Another purpose of the invention is to provide a layer-multiplying device for a coextrusion system that is inexpensive to produce and easily applied and removed from a coextrusion head, so as to make the production of various types of multilayer film flexible.

This is achieved through the features described in essential terms in claim 1. Dependent claims describe preferential features of the invention.

### BRIEF DESCRIPTION OF THE DRAWINGS

Further features and advantages of the invention will, however, be best illustrated by the following detailed description of a preferred embodiment, given purely as an example and not as a limitation, and illustrated in the accompanying drawings, wherein:
fig. 1 is a perspective view from below of a multiplier according to the invention;
Fig. 2 is a perspective view from above of the multiplier in Fig. 1;

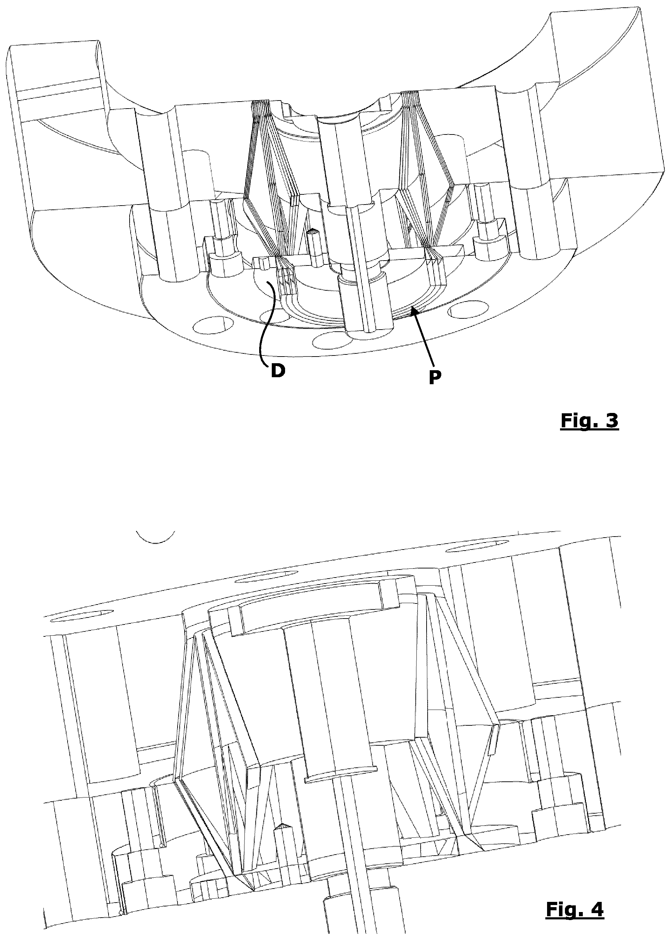

fig. 3 is a view similar to fig. 1 but in longitudinal section;
Fig. 4 is an enlarged view of a detail from Fig. 3;
Fig. 5 is a view of the inlet side of the multiplier according to the invention;
Fig. 6 is a perspective view of the internal retaining pin and dividing plate of the multiplier according to the invention;
Figs. 7A-7D are cross-sectional views at 90° and cross-sectional views at different sections of the multiplier according to the invention;
fig. 8 is a 90° sectional view of the multiplier according to the invention;
Fig. 9 is a perspective view and longitudinal section with removed parts of the multiplier according to the invention;
Fig. 10 is a perspective view from below of the multiplier according to the invention with parts removed;
fig. 11 is a perspective view from above of the multiplier according to the invention with parts removed;
fig. 12 is a perspective view of a longitudinal section of two coupled multipliers; and
fig. 13 is a sectional view of a multiplier coupled to a seven-layer extrusion head.

### DETAILED DESCRIPTION OF PREFERRED EMBODIMENTS

According to the invention, an innovative device is provided which is arranged to be mounted on the outlet end of a multilayer extruder head having a die extending along a closed line, e.g. circular. The multilayer extrusion head can be of any known type per se and will not be further described and illustrated herein because it is part of the general knowledge of a person skilled in the art.

In the attached figures, it is assumed that the extrusion head has a die with a circular slit from which a three-layer film exits, for example two outer layers of LDPE with an inner barrier layer of PA6. This representation is only an example, but it is understood that the layers of the tubular film exiting the extrusion head may also be fewer or more.

The multiplier device according to the invention comprises an axially symmetrical body, referred to hereinafter as multiplier M, which has a bottom abutting surface M₁, intended to be coupled to an end abutting surface (not shown) of an extrusion head, in which a single inlet slit I is defined and which is arranged to be coupled in register adjacent to a corresponding outlet slit of the extrusion head

In the context of this application, terms such as top and bottom refer to the representations in the figures, which show the system in the typical set-up in which it is used. However, it is understood that the device of the invention, together with the extrusion head, may also take up different attitudes depending on the configuration of the extrusion machine.

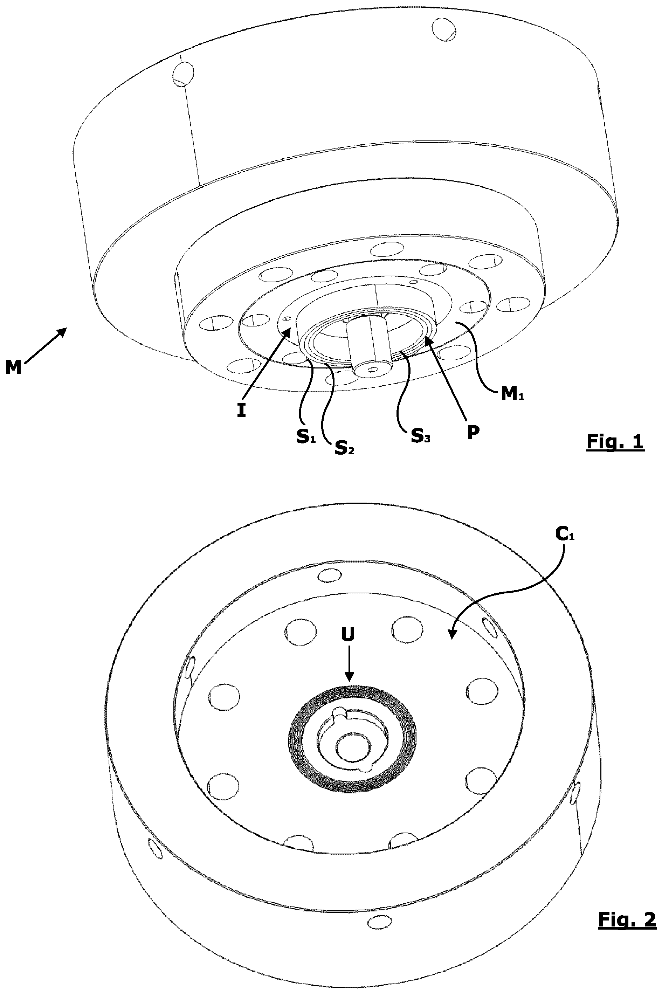

The multiplier M preferably also has a top abutting surface C₁ (see Fig. 2), parallel to the bottom surface M₁, for the purpose shown below.

In the embodiment depicted, the inlet slit I is of constant width and extends along a circular path, but this should be understood as a non-limiting example configuration. As shown in Fig. 1 as an example, through the inlet slit I enters a plastic material P in the molten state, which has three layers S₁, S₂ and S₃, as protruding from a multilayer extrusion head arranged immediately upstream.

The multilayer plastic flow P, by means of appropriate thermoregulation of the extrusion head and the multiplier device of the invention, is maintained in a fluid state with a density and viscosity adequate to ensure smooth flow and processability even downstream of the multiplier (e.g. to perform a bubble-blowing stretching, before being cooled and forming a corresponding plastic film).

The inlet slit I is formed on the entrance side of an initial partition plate D, which lays on an abutment plane M₁.

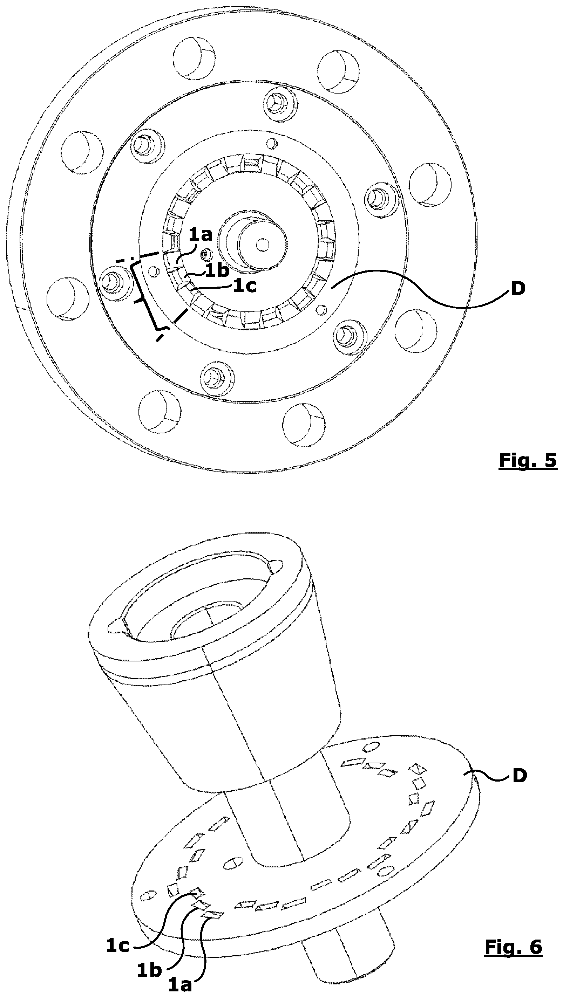

As well depicted in Fig. 5, the inlet slit I extends over a closed (circular) perimeter and has a plurality Z of groups of dividing channels, each group having N dividing channels 1a-1n, equally distributed over its entire development, wherein Z is an integer and N represents the multiplication factor of the film layers which is determined by the device of the invention.

Put another way, the dividing plate D is equipped with a plurality Z of groups of N dividing channels 1a-1n at the entrance slit I.

In the example shown in Fig. 5, there are nine groups (Z=9), each with three (N=3) dividing channels 1a-1c.

Referring to the illustrated embodiment, each of the Z groups of channels equally distributed over the extension of the inlet slit I, has three dividing channels 1a-1c that subdivide that portion of the plastic flow channel into three distinct portions, each radially directed in different directions: for example the first dividing channel 1a diverts the flow radially outwards, the second dividing channel 1b lets the flow continue at the same radial distance from the centre, the third dividing channel 1c diverts the flow radially inwards. This radial deflection is useful to bring the development of the three channels to three different radial distances (with respect to the longitudinal axis of the device) instead of to the same radial distance of slit I.

In addition, each of the channels 1a-1c converges from a cross-section having radial width equal to that of the inlet slit I to a cross-section having radial width approximately 1/N, in the illustrated case approximately 1/3 of that at the beginning.

That is, the inlet ports of the channels have a radial width equal to that of the inlet slit I and circumferential extension equal to Z/N of that of the inlet slit I, while the corresponding outlet ports of the individual channels 1a-1c have similar circumferential extension but radial width equal to 1/N of that of the inlet slit I and are radially staggered from each other.

The reduction in cross-section and the radial deviation of the three dividing channels 1a-1c is well understood by comparing Figs. 5 and 6 as well as Figs. 7A and 7B: on the inlet side of the initial dividing plate D (Fig. 5) the channels have equal-width ports and are all aligned on the same circumference of the slit I, while on the outlet side each channel terminates with a reduced (1/3) width port and radially staggered position.

Downstream of the initial dividing plate D is a divergent plate V equipped with Z groups of divergent channels 2a-2n, which are also equally circumferentially distributed. The divergent channels 2a-2n are arranged in continuity with the dividing channels 1a-1n and fan out the flow of plastic material as it advances, i.e. running in the longitudinal direction of the device.

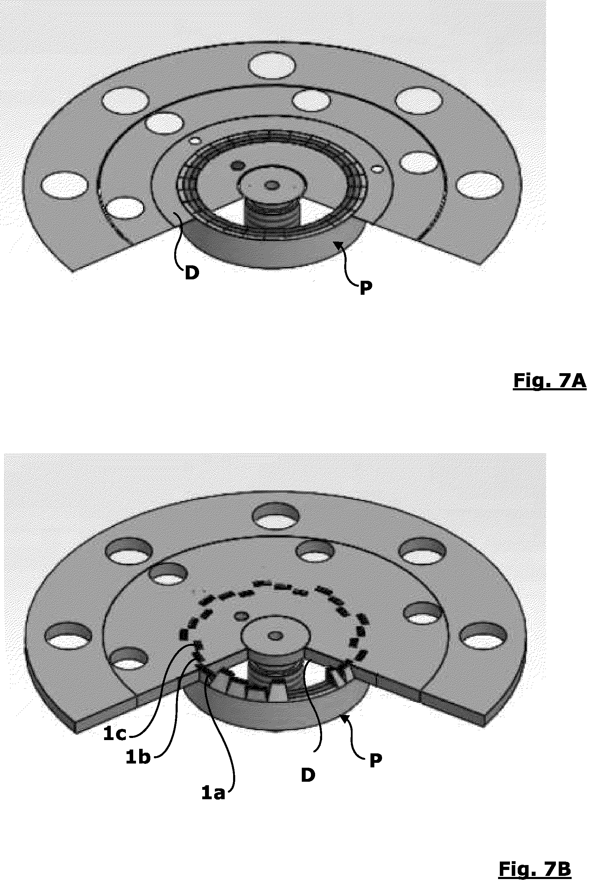

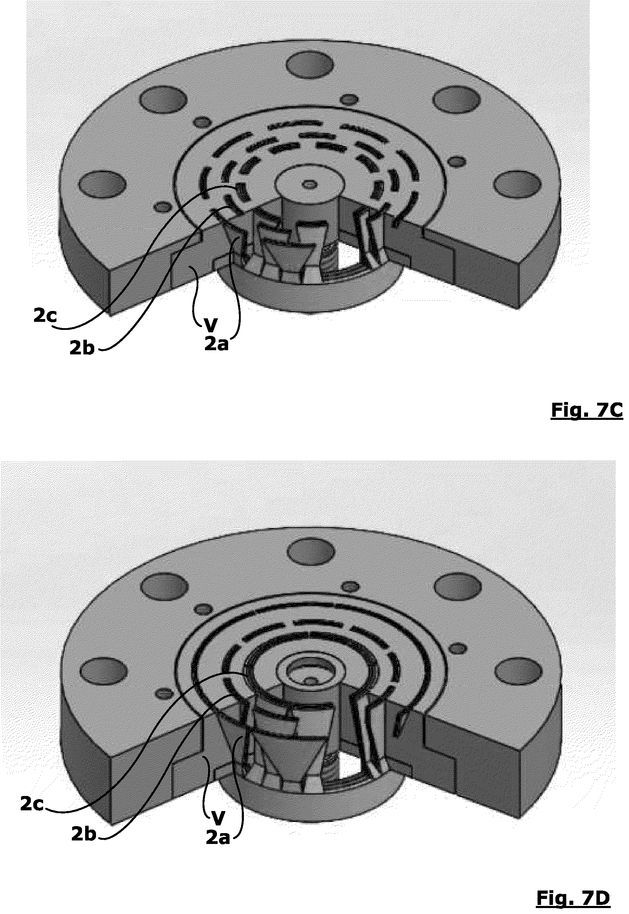

Referring to Figs. 7B and 7C, it shall be noted that the divergent channels remain at a constant radial width of about 1/N, but diverge progressively over a circumferential extension that returns to the overall extension of the source group to which they belong, i.e. widens by N times.

In Fig. 7D, for example, it can be seen that near the outlet side of divergent plate V, divergent channels 2a and 2c have a circumferential extension equal to that of the relevant source group and have therefore joined again with the adjacent ones, while channel 2b has not yet reached its maximum extension.

As can be understood from observation of the figures, after the circumferential and radial separation effected by the initial dividing plate D, the divergent plate V has the purpose of recomposing N continuous concentric streams of plastic material, radially spaced apart and each stratified in the same way as the original one and of proportionally (1/N) reduced thickness.

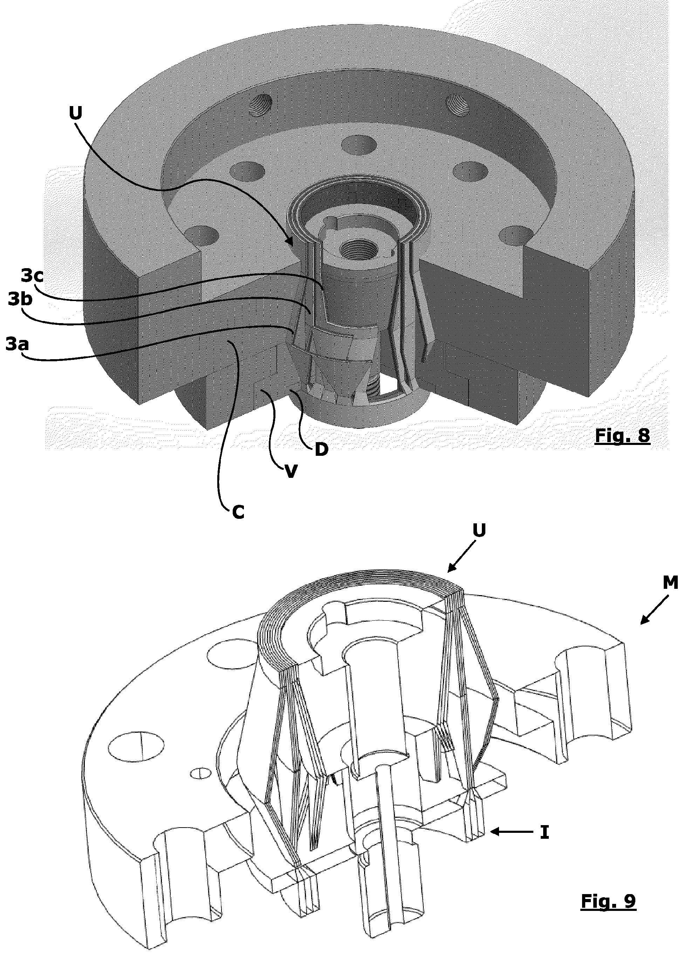

Downstream of the divergent plate V is a convergent plate C, which has the reverse purpose of the divergent plate. As depicted in Fig. 8, the convergent plate C has N concentric channels 3a-3n, in this case three, arranged in continuity with the divergent channels 2a-2n and suitable for radially re-converging the three streams of plastic material towards a single outlet slit U where the three streams join adjacent to each other.

In the convergent plate C, there is no longer a division into equally spaced groups, because all the Z groups of N channels have merged into the N concentric channels. In the example considered by the embodiment shown in the figures, the convergent plate C has three concentric channels 3a-3c converging towards the central axis of the device until they open from a single circular outlet slit U.

The outlet slit U preferably has the same perimeter and radial width as the inlet slit I, e.g. a radial width of 1-2 mm. At the outlet slit U, however, the plastic material flow has a layering that reproduces concentrically by N times the initial layering. If the plastic material flow initially has three layers and the multiplier is configured with N=3, at the outlet of the multiplier device the plastic material flow will have nine layers consisting of the initial three layers replicated three times adjacent to each other. This also allows the absolute thickness of each layer in the plastic film to be reduced.

Fig. 9 provides further evidence of the subdivision of a three-layer flow entering the multiplier device M of the invention. The flow enters from below, is subdivided into groups of three diverging flows (radially deviated and circumferentially separated), which extend until they rejoin in three continuous concentric flows, and then reconverge upwards into a single outlet slit U where the layers are nine.

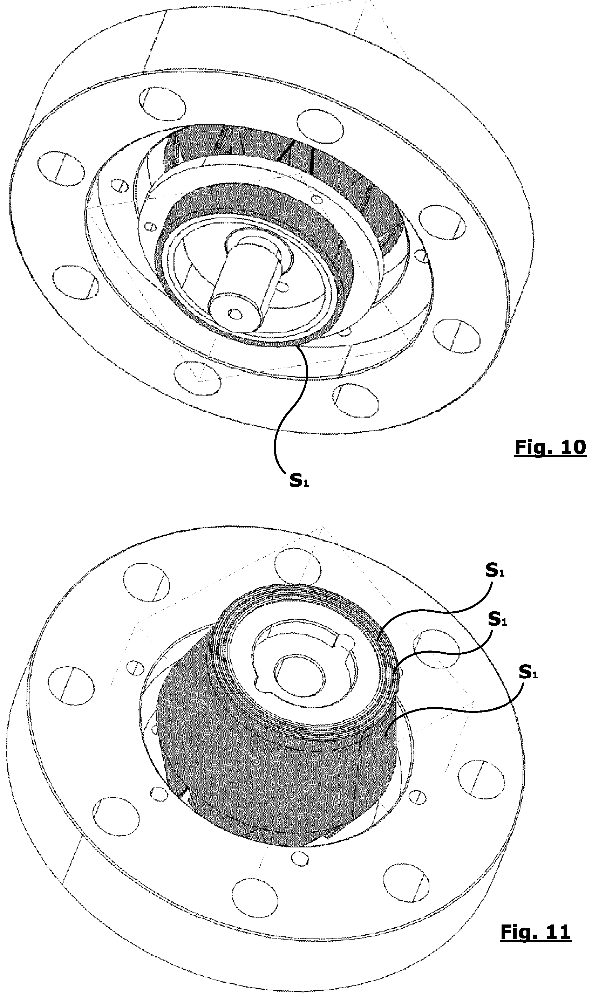

In fig. 10 the device of the invention is shown with the divergent plate V removed, to better show the flow pattern from below. In fig. 11, on the other hand, the device is shown with the convergent plate C removed, to appreciate the flow of the three concentric continuous channels, which converges to a single continuous flow in which the three initial layers are found adjacent three times (see the regular repetition of layer S₁).

In this way, due to the multiplier of the invention, with a modest axial size and a relatively simple construction, it is possible to multiply the layering of the initial tubular film by N, while maintaining a film thickness of the same order of magnitude as the initial film thickness (slight differences can be voluntarily provided, depending on the material, number of layers and extrusion speed).

The tubular film thickness at the outlet, e.g. 1.4-1.8 mm, is then further thinned in the final film, after stretching with bubble inflation, to thicknesses in the nanometre range (20-150 microns).

The multiplication of layers in the film allows the thickness of the individual layers to be further reduced and the molecular composition of the compound aligns, increasing the technical and mechanical properties of the final product. In particular, assuming that there are initially two barrier layers, with a multiplier with N=3, the barrier layers become six, strongly increasing the barrier properties but still maintaining the initial thickness.

The construction of the multiplier by assembling the three plates D, V and C on top of each other simplifies the machining of the channels, which have convergent/divergent shapes, but is not necessarily the one illustrated. Depending on the construction technology available, one, two or more plates can also be made integral with each other or further subdivided into more separable parts than illustrated. In this context, the use of the term 'plates' is to be understood as equivalent to the term 'zones' of the multiplier in which the channels perform the same function (i.e. division, divergence and convergence).

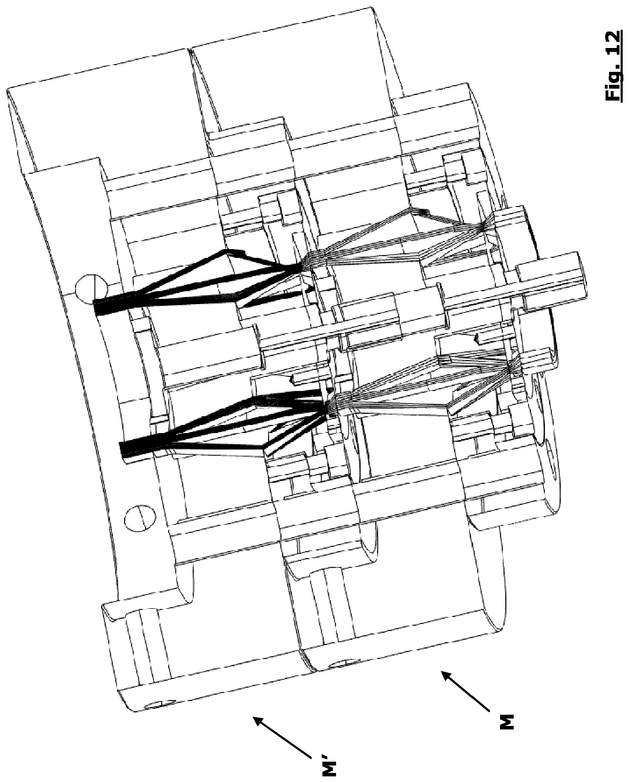

Due to the relatively short axial extension of the device and the fact that the inlet I and outlet U slits can have the same geometry, it is possible to assemble more than one multiplier in series and further increase the number of layers by a multiplication factor NxS, where S is the number of multipliers assembled sequentially one after the other along the plastic material flow. In fig. 12, for example, two multipliers M and **M'** assembled in series are shown, with the bottom plane M₁ of the first multiplier M in contact abutment with an upper plane C₁ of the second multiplier M'.

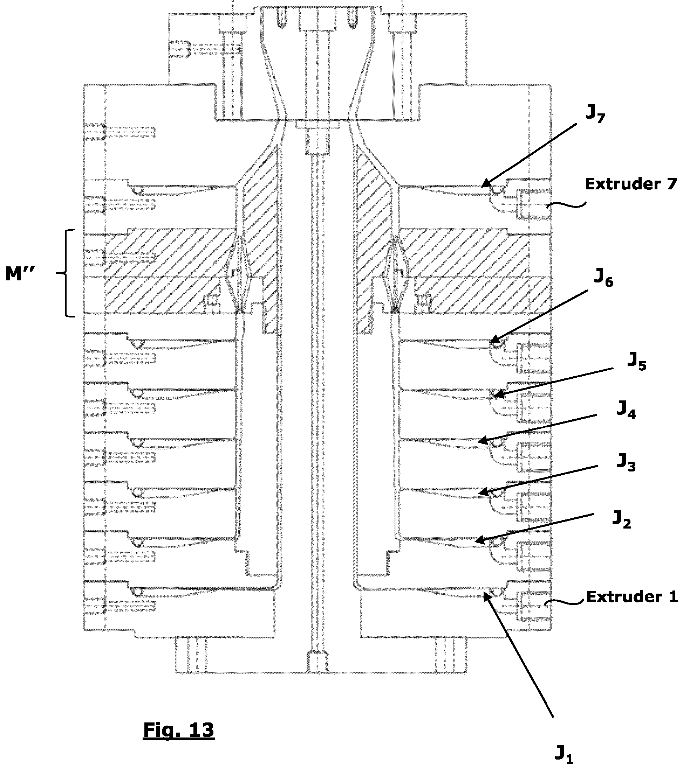

In fig. 13, on the other hand, a possible way of applying a multiplier M'' according to the invention on a seven-layer multilayer head is shown. Preferably, the first layer, coming from the injector J₁, and the last layer, coming from the injector J₇, join at the outlet of the extrusion head without further multiplication, while the intermediate layers (from the second injector to the sixth injector) are passed through the multiplier M'' with N=3. This results in a multilayer film, in which the five middle layers are multiplied by three and the two outermost layers are only coupled to the others in the end die to obtain a 5x3+2=17layer film.

It is understood, however, that the invention is not to be considered limited to the particular arrangements illustrated above, which are only illustrative and preferred embodiments, but that several variants are possible, all within the reach of a person skilled in the art, without thereby going beyond the scope of protection of the invention itself, as defined by the following claims.

## Claims

1. Extrusion system for a multilayer tubular film, comprising
an extruder, and
a multi-layer extrusion head equipped with an end extrusion slit,
**characterised by** the fact that downstream of said extrusion head there is provided at least a multiplier device (M, M', M") equipped with an inlet slit (I), arranged in register with said extrusion slit, and an outlet slit (U) and comprising in sequence
an initial dividing plate (D) with a plurality Z of groups of N dividing channels (1a-1n) at said inlet slit (I) connecting respective adjacent inlet ports
of radial width equal to that of said inlet slit (I) and circumferential extension equal to Z/N of that of said inlet slit (I)
to corresponding outlet ports
of radial width equal to 1/N that of said inlet slit (I) and circumferential extension equal to Z/N that of said inlet slit (I)
staggered radially between them,
a divergent plate (V) equipped with a plurality Z of groups of N divergent channels (2a-2n) arranged in continuity with said dividing channels (1a-1n) and having an increasing circumferential extension thereby forming N continuous concentric radially staggered channels,
a convergent plate (C) equipped with N continuous circumferential channels (3a-3n) arranged in continuity with said divergent channels (2a-2n) and converging radially with each other toward a single outlet slit (U).

2. Extrusion system as in claim 1, wherein said inlet slit (I) is formed on an initial abutment plane (M₁) of said initial dividing plate (D) which is parallel to an end abutment plane (C₁) of said converging plate (C) in which said outlet slit (U) is formed.

3. Extrusion system as in claim 1 or 2, wherein N=3.

4. Extrusion system as in any one of the preceding claims, wherein both downstream and upstream of said multiplier device (M") a multilayer extrusion head is provided.

5. Multiplier device (M, M', M") for a multilayer extrusion head **characterised by** that it has an inlet slit (I) and an outlet slit (U) and comprising in sequence
an initial dividing plate (D) with a plurality Z of groups of N dividing channels (1a-1n) at said inlet slit (I) connecting respective adjacent inlet ports
of radial width equal to that of said inlet slit (I) and circumferential extension equal to Z/N of that of said inlet slit (I)
to corresponding outlet ports
of radial width equal to 1/N that of said inlet slit (I) and circumferential extension equal to Z/N that of said inlet slit (I)
staggered radially between them,
a divergent plate (V) equipped with a plurality Z of groups of N divergent channels (2a-2n) arranged in continuity with said dividing channels (1a-1n) and having an increasing circumferential extension thereby forming N continuous concentric radially staggered channels,
a convergent plate (C) equipped with N continuous circumferential channels (3a-3n) arranged in continuity with said divergent channels (2a-2n) and converging radially with each other to a single outlet slit (U).

6. Multiplying device (M, M', M") as in claim 5, wherein said inlet slit (I) is formed on an initial abutment plane (M₁) of said initial dividing plate (D) which is parallel to an abutment end plane (C₁) of said converging plate (C) in which said outlet slit (U) is formed.

7. Multiplying device (M, M', M") as in claim 5 or 6, wherein N=3.
